# EUROPEAN PATENT SPECIFICATION

(11) **EP 2 614 255 B1**
(45) Date of publication and mention of the grant of the patent: **11.11.2015**
(21) Application number: 11751618.7
(22) Date of filing: 06.09.2011
(51) Int. Cl.: F03D 3/06

(54) **VERTICAL AXIS WIND TURBINE**
WINDTURBINE MIT VERTIKALER ACHSE
ÉOLIENNE À AXE VERTICAL

(30) Priority: 07.09.2010 IT BO20100546
(43) Date of publication of application: 17.07.2013
(73) Proprietor: Linz Electric S.P.A., 37040 Arcole (VR) (IT)
(72) Inventor: PEDROLLO, Giulio, I-47030 Arcole (VR) (IT)
(74) Representative: Manzella & Associati
(86) International application number: PCT/EP2011/065379
(87) International publication number: WO 2012/032038

(56) References cited:
- AT-B- 412 011
- DE-A1-102004 041 281
- DE-U1- 9 419 221
- GB-A- 190 913 148
- JP-A- 2005 061 328
- US-A1- 2008 267 777

## Description

### Technical Field

The present invention regards a vertical axis wind turbine.

### Background Art

Wind turbines suitable to convert kinetic energy of the wind into other forms of energy, for example in electric energy, have been known. The interest for such types of apparatuses, which are able to take advantage of a source of so-called renewable energy, has increased in a considerable way in the last decades, because of the continuous increase of the world energetic requirements and the consequent worry for the exhausting of the non renewable energetic sources more widely used, such as mainly the ones represented by the fossil fuels.

More precisely, in a wind turbine the kinetic energy of the wind is converted in rotational energy used to rotate a rotor in an electric machine, in order to generate electric energy in such a way.

The known wind turbines distinguish themselves in both the horizontal axis and vertical axis main typologies.

The horizontal axis wind turbines usually comprise a helix propeller member mounted on a support structure and suitable to rotate about a horizontal axis connected to the electric machine through drive means. As the direction of the wind is not constant, it is necessary that the propeller member to be able to rotate integrally about a vertical axis, in a way as to arrange itself in the optimal direction to operate the energetic conversion. The continuous adaptation to the direction of the wind therefore implies a considerable wear and tear of the revolving support means of the propeller member and exposes the support structures to not negligible stability problems. Further to that it is to be noted that the horizontal axis wind turbines turn out to be very noisy and require their positioning in very windy sites. For this reason they are generally installed in positions distant from the inhabited centres and make necessary costly auxiliary installations for transporting the produced electric energy.

The vertical axis wind turbines have a plurality of vanes arranges in a substantially vertical manner about a vertical axis which coincides with the rotation axis of the rotor of an electric machine or is connected thereto through the interposition of suitable drive means. With respect to the horizontal axis wind turbines, the vertical axis turbines have firstly the advantage of functioning efficiently for any direction of the wind. As a consequence they do not require any adaptation in the orientation of the vanes with respect to the wind current. Furthermore the vertical axis wind turbines are able to provide modest power quantities and then turn out to be particularly adapted in the cases wherein the electric energy is produced and provided directly in loco.

An example of vertical axis wind turbine is illustrated in patent application US 2007/0779028, which concerns an apparatus comprising a rotor shaft and a plurality of vanes linked thereto. Each vane has a front portion and a rear portion pivoted to each other at a hinge vertical axis. More precisely, during the functioning the rear portion is suitable to rotate with respect to the front portion, between an opened position and a closed position, to optimize the rotation motion about the rotor shaft according to the rate of the wind.

Another example of vertical axis wind turbine is disclosed in patent application AT412011, which describes an apparatus comprising a rotor assembly provided with a plurality of vanes associated with a generator member. Each of said vanes is connected to adjacent vanes through connection means.

Nevertheless the known vertical axis wind turbines have some drawbacks, among which in particular the considerable aerodynamic resistance, which implies a reduced delivered power and an elevated noise manifested during the functioning. Such an aspect strongly prejudices the installation thereof in urban areas, where on the contrary such turbines would find the most advantageous use, given the possibility to take benefit from the energy produced immediately downstream of the turbine.

Moreover to allow satisfying powers with respect to the needed requirements, the vertical axis of known type generally require the installation of auxiliary start motors and use building solutions rather complex and then costly.

### Disclosure

The task of the present invention is that of solving the aforementioned problems, devising a vertical axis wind turbine which allows to minimize the aerodynamic resistance.

Within such a task, it is further scope of the invention that of providing a vertical axis wind turbine which allows to equilibrate efficiently the aerodynamic forces distributed on the vanes.

Another scope of the invention is that of providing a vertical axis wind turbine which enables to reduce the deformations and stresses of its own components during use.

A further scope o the invention is that of providing a vertical axis wind turbine having a simple conception, a securely reliable functioning and versatile use, as well as relatively economic cost.

Another scope of the invention is that of providing a vertical axis wind turbine which offers an elevated security against possible damages caused to surrounding persons and things, because of possible failures during the functioning.

The cited scopes are attained, according to the present invention, by the vertical axis wind turbine according to claim 1.

According to the present invention, the wind turbine object of the invention provides a vertical axis rotor, comprising a plurality of vanes, suitable to be connected to a central generator member by means of substantially horizontal support means, and suitable to be connected to each other through interconnection means, which link each vane with adjacent vanes. The interconnection means between adjacent vanes cooperate with the support means to give the wind turbine shape stability and robustness during the functioning. The shape stability, also responsible for the stability of the yield, is in particular warranted thanks to the interconnection of each vane with both the successive vane and the preceding vane in the rotation direction of the wind turbine.

Presence of the interconnection means further gives the mechanical structure robustness, enabling the use of support means comprising one only support, preferably central, for each vane.

### Description of Drawings

Details of the invention shall be more apparent from the detailed description of a preferred embodiment of the vertical axis wind turbine according to the invention, illustrated for indicative purposes in the attached drawings, wherein:
figure 1 shows a front view of the wind turbine in hand;
figure 2 shows a detailed view of the wind turbine according to the invention.

### Best Mode

With particular reference to such figures, the vertical axis wind turbine according to the invention is indicated in its entirety with 1. The wind turbine 1 comprises a generator member 2 suitable to convert a rotational motion in electric energy, and installed at the end of a suitable support structure 3, such as for example a support rod.

Preferably the generator member 2 is contained in a wrapping 2a having for example a curved shape, such as to have a minimal interference with the wind.

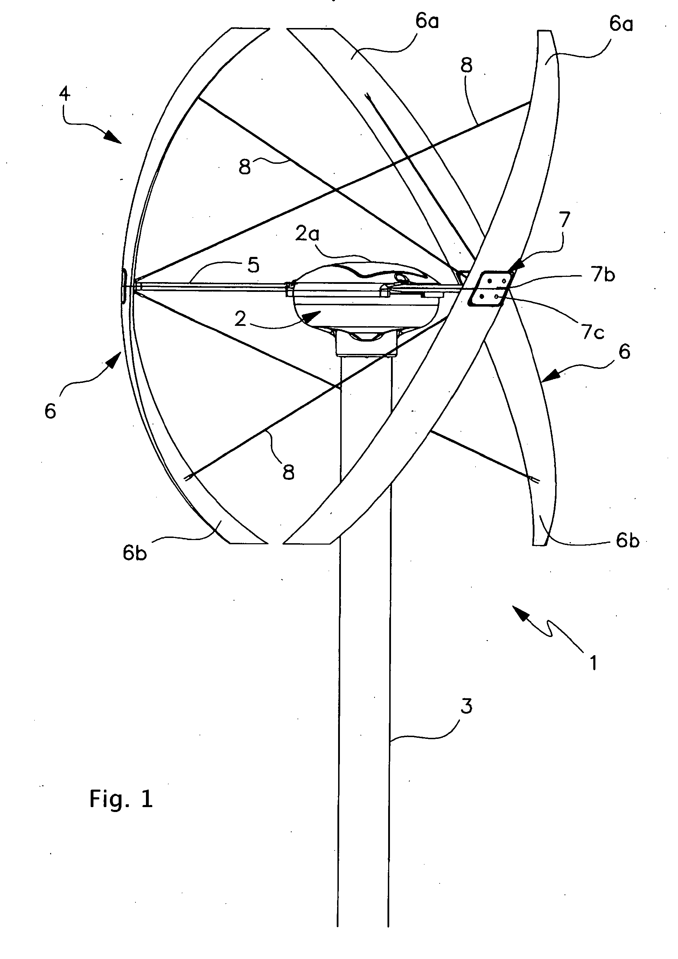

The wind turbine is provided with a rotor assembly 4, connected rotating to the generator member 2 and suitable to be actuated by the wind in a way as to produce a rotational motion about a vertical rotation axis. The rotor assembly 4 comprises a plurality of support means 5, substantially horizontal, suitable to be connected rotating to the generator member 2 and to support a plurality of vanes, as described in the following. Preferably, the support means are fixed in a way as to protrude radially as rays from the body of the generator member 2, and perpendicularly to the rotation axis of the rotor assembly 4 (fig. 1).

It is to be noted that the support means 5 are distributed about the generator member 2 and oriented in such a way as to present a minimal aerodynamic resistance. In the illustrated example, the support means have a lengthened and slightly rounded section profile, and are oriented in a way as to have the lengthened profile substantially perpendicular to the rotation axis of the rotor assembly 4, to say horizontal, as can be seen in figure 1. Preferably, the support means 5 are realized in composite material, so relatively light but resistant to static and dynamic loads. In the illustrated example, the rotor assembly 4 comprises three support means 5, to say one only for each vane, but it is possible to provide any number of vanes and so of support means 5 according to the requirements needed.

The rotor assembly 4 is provided with a plurality of vanes 6 connected to the ends of the support means 5, and suitable to receive the pressure of the wind. The vanes 6 have, with respect to the support means 5 fixed thereto in preferably central position, an upper portion 6a and a lower portion 6b.

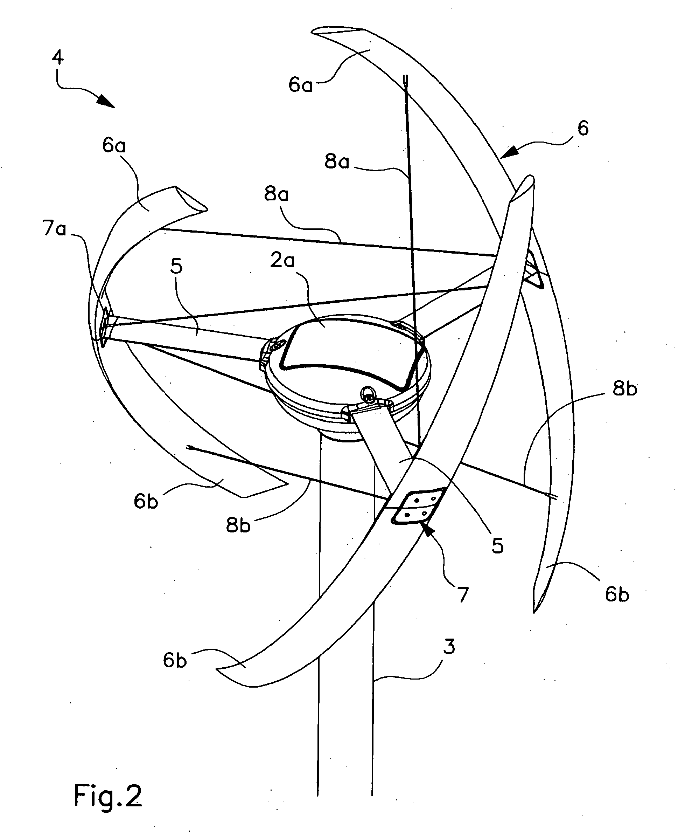

Preferably the vanes 6 have a biconvex wing or flat-convex profile, and have a helix curvature, as can be seen in figures 1 and 2, in such a way that the inner side of the upper portion 6a and the inner side of the lower portion 6b of the same vane 6 are oriented towards opposite directions, to say are "twisted".

It is to be underlined that, as previously said, in the rotor assembly 4 of the wind turbine 1 according to the invention, each vane 6 is preferably connected to the end of one unique support means 5, preferably at a central zone of the vane 6.

Fixing of the vanes 6 at the ends of the supports means 5 is carried out through suitable fixing means 7 such as, for example, suitable inner and outer plaques 7a, 7b suitable to be applied respectively on the inner and the outer surface of each vane 6, at the central zone of the same. In particular the inner and outer plaques 7a, 7b are arranged in a way as to allow the reciprocal fixing thereof through the vane 6, for example by means of suitable screw means 7c. Preferably the inner and outer plaques 7a, 7b are applied in such a way as to not protrude from the inner and outer surfaces of each vane 6, in a way as to maintain the aerodynamic character of the profiles of the same.

Preferably the inner plaques 7a are inserted at the end of the support means 5, but it is possible to provide that the inner plaques 7a and the support means are realized in one unique block.

The rotor assembly 4 is also provided with a plurality of interconnection means 8 between various vanes 6 suitable to connect each vane 6 to adjacent vanes to ensure the static and dynamic geometrical stability of the rotor assembly 4 during the functioning. Preferably the interconnection means 8 between various vanes 6 are constituted by suitable cables, for example of steel, able to resist to the traction stresses transmitted by the vanes in rotation, by effect of the centrifugal force.

In particular, the interconnection means 8 between various vanes 6 preferably comprise a plurality of upper cables 8a and a plurality of lower cables 8b, each one of the upper cables 8a being suitable to be fixed at an upper part of a respective inner plaque 7a of fixing means 7 applied on one vane 6, and each one of the lower cables 8b being suitable to be fixed at a lower part of a respective inner plaque 7a applied on one vane 6.

Practically, to each inner plaque 7a applied to a vane 6 are fixed one upper cable 8a and one lower cable 8b. The opposite end of the same upper cable 8a is fixed close to the upper end of a first adjacent vane, while the opposite end of the lower cable 8b is fixed close to the lower end of a second adjacent vane. In this way, each vane 6 of the rotor assembly 4 turns out linked to adjacent vanes through four different fixing points.

Preferably, the upper cable 8a connected to each inner plaque 7a is connected to the adjacent vane toward which is oriented the upper end of the vane 6 whereon the inner plaque 7a is applied. Similarly, the lower cable 8b connected to each inner plaque 7a is preferably connected to the adjacent vane toward which the lower end of the vane 6 is oriented, whereon the same inner plaque 7a is applied, as can be seen in figures 1 and 2.

Functioning of the vertical axis wind turbine according to the present invention turns out to be easy to understand from the preceding description.

According to the conditions of use of the wind turbine 1, one provides to decide the number of vanes 6 and of support means 5 to be mounted. During the mounting, the length of the interconnection means 8 of various vanes 6 between each other is also chosen in a way as to carry out a pretensioning of the vanes 6.

One the wind turbine 1 is installed, with the rotation axis of the rotor assembly 4 and of the generator member 2 arranged vertical, the exposition of at least one vane 6 to a wind current provokes the activation of a rotational motion of the rotor assembly 4. Such a rotation is transmitted to the generator member 2 through the support means 5.

The so-obtained rotational motion allows to start the wind turbine 1, and is usefully supported by the wind which continues to engage the vanes 6. The generator member 2 thus produces usable electric energy as an exit.

The wind turbine in hand attains the scope of minimizing the aerodynamic resistance. Such a result is obtained in particular thanks to the inventive idea of interconnecting between them the vanes 6 through cables 8, which enables to use one unique support means 5 to link each vane 6 to the generator member 2. The use of cables further allows to limit the weight due to the support means 5, further contributing to make the rotation of the rotor assembly 4 easier, and so a major efficiency of the wind turbine 1, also in conditions of weak wind.

A characteristic of the method and of the device in hand consists in the fact that the configuration of the cables allows to equilibrate in a more efficient manner the centrifugal forces on the vanes 6, which contributes to a major efficiency of the wind turbine 1.

Another advantage of the wind turbine according to the invention consists in the use and in the configuration of the cables 8, which in combination with the support means 5 enable to increase the number of fixing points for the vanes 6 and so to reduce the deformations thereof due to the centrifugal force, simultaneously limiting the use of costly materials, necessary for realizing rigid supports.

A further advantage of the wind turbine according to the invention consists in the fact that, in case of structural collapse due to the breaking of one or more support pieces 5, the presence of the cables 8 avoids the projection at a distance of components of the vanes 6 because of the centrifugal force. Therefore, security of the turbine according to the invention, towards surrounding persons and objects during the functioning, turns out significantly improved with respect to the traditional solutions.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Vertical axis wind turbine, comprising
a generator member (2) arranged at the top of a support structure (3) and converting a rotational motion in electric energy;
a rotor assembly (4) with vertical rotation axis, connected to said generator member (2);
said rotor assembly (4) comprising a plurality of vanes (6) connected to said generator member (2) by means of a plurality of support means (5) substantially perpendicular to said vertical rotation axis;
a plurality of interconnection means (8) between various vanes (6), connecting each of said vanes (6) to adjacent vanes in order to ensure the stability of said plurality of vanes (6) in rotation,
**characterized in that**
said interconnection means (8) between said vanes (6) connect a central area of one vane (6) to an upper portion (6a) of a first adjacent vane and a lower portion (6b) of a second adjacent vane.

2. Wind turbine according to claim 1, **characterized in that** each of said vanes (6) is connected to one unique support means (5).

3. Wind turbine according to the previous claims, **characterized in that** said interconnection means (8) comprises cables able to resist to the traction stresses transmitted by the vanes in rotation, in consequence of the centrifugal force.

4. Wind turbine according to claim 1, **characterized in that** said generator member (2) is contained in a wrapping (2a) having such a shape as to have a minimal interference with the wind.

5. Wind turbine according to claim 1, **characterized in that** said vanes (6) have a helix-shaped curvature, such that the internal side of the upper portion (6a) and the internal side of the lower portion (6b) of one same vane (6) are oriented towards opposite directions.

## Patentansprüche

1. Windkraftanlage mit vertikaler Rotationsachse, umfassend:
ein Generatorelement (2), das oben an einer Stützstruktur (3) angeordnet ist und eine Drehbewegung in elektrische Energie umwandelt,
eine Rotoranordnung (4) mit vertikaler Rotationsachse, die mit dem Generatorelement (2) verbunden ist,
wobei die Rotoranordnung (4) mehrere Flügel (6) umfasst, die mit dem Generatorelement (2) mittels mehrerer Stützmittel (5) verbunden sind, die im Wesentlichen senkrecht zur vertikalen Rotationsachse liegen,
mehrere Verbindungsmittel (8) zwischen verschiedenen Flügeln (6), die jeden der Flügel (6) mit benachbarten Flügeln verbindet, um die Stabilität der mehreren Flügel (6) in der Rotation zu gewährleisten,
**dadurch gekennzeichnet, dass**
die Verbindungsmittel (8) zwischen den Flügeln (6) einen mittleren Bereich eines Flügels (6) mit einem oberen Abschnitt (6a) eines ersten benachbarten Flügels und einem unteren Abschnitt (6b) eines zweiten benachbarten Flügels verbindet.

2. Windkraftanlage nach Anspruch 1, **dadurch gekennzeichnet, dass** jeder der Flügel (6) mit einem einzigen Stützmittel (5) verbunden ist.

3. Windkraftanlage nach den vorhergehenden Ansprüchen, **dadurch gekennzeichnet, dass** die Verbindungsmittel (8) Kabel umfassen, die in der Lage sind, den durch die Flügel in Rotation übertragenen Traktionsbelastungen infolge der Zentrifugalkraft standzuhalten.

4. Windkraftanlage nach Anspruch 1, **dadurch gekennzeichnet, dass** das Generatorelement (2) in einer Umhüllung (2a) enthalten ist, die eine derartige Form aufweist, dass sie einen minimalen Windwiderstand hat.

5. Windkraftanlage nach Anspruch 1, **dadurch gekennzeichnet, dass** die Flügel (6) eine spiralförmige Krümmung aufweisen, so dass die Innenseite des oberen Abschnitts (6a) und die Innenseite des unteren Abschnitts (6b) ein und desselben Flügels (6) in entgegengesetzte Richtungen ausgerichtet sind.

## Revendications

1. Eolienne à axe vertical, comprenant
un organe générateur (2) disposé au sommet d'une structure de support (3) et convertissant un mouvement de rotation en énergie électrique ;
un groupe rotor (4) avec axe de rotation vertical, connecté audit organe générateur (2) ; ledit groupe rotor (4) comprenant une pluralité de pales (6) reliées audit organe générateur (2) au moyen d'une pluralité de moyens de support (5) sensiblement perpendiculaires audit axe de rotation vertical ;
une pluralité de moyens d'interconnexion (8) entre différentes pales (6), qui connectent chacune desdites pales (6) à des pales adjacentes pour garantir la stabilité de ladite pluralité de pales (6) en rotation,
**caractérisée en ce que**
lesdits moyens d'interconnexion (8) entre lesdites pales (6) connectent une zone centrale d'une pale (6) à une portion supérieure (6a) d'une première pale adjacente et à une portion inférieure (6b) d'une deuxième pale adjacente.

2. Eolienne selon la revendication 1, **caractérisée en ce que** chacune desdites pales (6) est connectée à un unique moyen de support (5).

3. Eolienne selon les revendications précédentes, **caractérisée en ce que** lesdits moyens d'interconnexion (8) comprennent des câbles en mesure de résister aux contraintes de traction transmises par les pales en rotation, sous l'effet de la force centrifuge.

4. Eolienne selon la revendication 1, **caractérisée en ce que** ledit organe générateur (2) est enfermé dans une enveloppe (2a) ayant un profil tel qu'il présente une interférence minimale avec le vent.

5. Eolienne selon la revendication 1, **caractérisée en ce que** lesdites pales (6) présentent une courbure en forme d'hélice, de manière que le côté interne de la portion supérieure (6a) et le côté interne de la portion inférieure (6b) d'une même pale (6) soient orientés vers des directions opposées.
